# EUROPÄISCHE PATENTSCHRIFT

(11) **EP 2 652 518 B1**
(45) Veröffentlichungstag und Bekanntmachung des Hinweises auf die Patenterteilung: **12.07.2017**
(21) Anmeldenummer: 11802306.8
(22) Anmeldetag: 02.12.2011
(51) Int. Cl.: G01S 7/527, G01S 15/93

(54) **VERFAHREN UND VORRICHTUNG ZUR AKUSTISCHEN ABTASTUNG EINES BEREICHS**
METHOD AND DEVICE FOR ACCOUSTICALLY SENSING AN AREA
PROCÉDÉ ET DISPOSITIF DE DÉTECTION ACOUSTIQUE D'UNE ZONE

(30) Priorität: 14.12.2010 DE 102010062983
(43) Veröffentlichungstag der Anmeldung: 23.10.2013
(73) Patentinhaber: Robert Bosch GmbH, 70442 Stuttgart (DE)
(72) Erfinder: KALBHENN, Micha, 71636 Ludwigsburg (DE); KLOTZ, Albrecht, 71229 Leonberg (DE); SCHIRMER, Juergen, 69124 Heidelberg (DE); TREPTOW, Thomas, 71229 Leonberg (DE); SCHMID, Dirk, 75397 Simmozheim (DE); BANNOW, Nico, 70374 Stuttgart (DE); RAPPS, Peter, 76227 Karlsruhe (DE); KIRCHNER, Tobias, 71636 Ludwigsburg (DE); DITTRICH, Thomas, 75242 Neuhausen (DE); SCHUMANN, Michael, 70597 Stuttgart (DE)
(86) Internationale Anmeldenummer: PCT/EP2011/071623
(87) Internationale Veröffentlichungsnummer: WO 2012/080004

(56) Entgegenhaltungen:
- DE-A1-102004 020 426
- JP-A- 10 268 035
- US-A- 5 335 545
- US-A1- 2001 012 238

## Beschreibung

### Stand der Technik

Insbesondere aus dem Automobilbereich ist bekannt, Pulsechoverfahren zur Umgebungserfassung zu verwenden. Beispielsweise bei Einparkassistenzsystemen werden Ultraschallwandler verwendet, die einen Abtastpuls aussenden und diesen wieder empfangen. Aus der Laufzeit ergibt sich der Abstand zwischen Wandler und reflektierendem Objekt.

Die Masse sowie die Federelastizität eines akustischen Wandlers definieren zum einen eine Eigenresonanzfrequenz des Wandlers und bilden zum anderen mechanische Energiespeicher. Es ergibt sich ein schwingungsfähiges System, das auch nach dem Ende der Anregung nachschwingt. Nach dem Ende dieses Nachschwingvorgangs beginnt der Empfangszyklus. Das Nachschwingen definiert somit eine Totzeit, während der nicht empfangen wird, und die beim Umschalten vom Sende- auf den Empfangsmodus des Wandlers einzuhalten ist.

Beispielsweise die Druckschrift DE 10 2004 020426 A1 erwähnt die Totzeit, die sich durch das Nachschwingen ergibt, als ein Problem, das eine minimale Messentfernung nach unten begrenzt. Die Druckschrift erwähnt als minimale Messentfernung bzw. Messgrenze eine Entfernung von 20 cm. In diesem Kontext wird in der Druckschrift darauf hingewiesen, dass Echosignale kürzerer Distanz mit dem Nachschwingen verschmelzen und nicht mehr erfasst werden können. Mit dem gleichen Problem befasst sich die Druckschrift US20010012238, wo ein nahes Objekt innerhalb der Nachschwingzeit eines akustischen Wandlers anhand eines Frequenzunterschiedes zwischen Ausschwingfrequenz des Wandlers und Frequenz des reflektierten Objekt-Signals detektiert wird. Es ist zwar bekannt, das Nachschwingen durch zusätzliches mechanisches Dämpfen zu verringern. Jedoch wird dadurch die gesamte Empfindlichkeit des Wandlers verringert, weshalb diese Maßnahme nur begrenzt angewandt werden kann.

Dennoch besteht vielfach der Wunsch, Abstandssensoren insbesondere für den Automobilbereich vorzusehen, die auch Objekte in kürzeren Entfernungen erfassen können.

### Offenbarung der Erfindung

Diese Aufgabe wird gelöst durch das Verfahren und die Vorrichtung gemäß den unabhängigen Ansprüchen.

Die Erfindung ermöglicht die Erfassung von Echosignalen während der Nachschwingzeit. Dadurch sind Objekte in geringem Abstand zu dem akustischen Wandler erfassbar. Ein ansonsten blinder Bereich in nächster Nähe zum akustischen Wandler ist somit erfassbar. Im Rahmen von Kollisionswarnsystemen kann daher ein besonders wichtiger Bereich erfasst werden, so dass beispielsweise das Rangieren in nächster Nähe ermöglicht wird. Die Kollisionsgefahr wird dadurch reduziert. Ferner können Sicherheitsabstände verringert werden, ohne dass sich die Kollisionsgefahr erhöhen würde. Die Erfindung lässt sich mit üblichen Mitteln umsetzen, wobei insbesondere bereits bestehende Systeme nur geringfügig modifiziert werden müssen, um die Erfindung zu realisieren.

Anstatt einen zurückgeworfenen Sendepuls während der Nachschwingzeit zu ignorieren, sieht die Erfindung vor, ein Empfangssignal eines akustischen Wandlers innerhalb einer Nachschwingzeit des Wandlers näher zu analysieren, um trotz einer Nachschwingbewegung des Wandlers einen zurückgeworfenen Sendepuls zu erkennen. Das Empfangssignal innerhalb der Nachschwingzeit des Wandlers setzt sich zusammen aus einer Signalkomponente, die das Nachschwingen wiedergibt, sowie einer Signalkomponente, die den zurückgeworfenen Sendepuls wiedergibt. Hierbei dominiert die durch Nachschwingen erzeugte Signalkomponente diejenige Signalkomponente, welche durch den zurückgeworfenen Sendepuls im Wandler erzeugt wurde. Um dennoch einen zurückgeworfenen Sendepuls zu empfangen, der während der Nachschwingzeit des Wandlers eintrifft, wird die Phaseninformation des Empfangssignals betrachtet. Da das Nachschwingverhalten im Wesentlichen durch Eigenschaften des Wandlers definiert ist, d.h. durch eine Federkonstante und eine Schwingungsmasse, kann das Nachschwingverhalten als konstant angenommen werden. Dieses Nachschwingverhalten spiegelt sich unmittelbar in einem Soll-Phasenverlauf wieder. Daher kann auch der Soll-Phasenverlauf vorgegeben werden. Der Soll-Phasenverlauf gibt Phaseninformation über den Phasenverlauf des Empfangssignals wieder, das der Wandler in der Nachschwingzeit abgibt, wenn er weder elektrisch noch akustisch angeregt wird. Der Soll-Phasenverlauf gibt gleichermaßen die Resonanzfrequenz des Wandlers wieder und entspricht somit den akustischen Eigenschaften des Wandlers, die durch dessen Bauweise vorgegeben sind.

Um erfindungsgemäß innerhalb der Nachschwingzeit des Wandlers einen zurückgeworfenen Sendepuls zu empfangen, wird ein Ist-Phasenverlauf des Empfangssignals mit dem Soll-Phasenverlauf verglichen. Der Ist-Phasenverlauf des Empfangssignals setzt sich zusammen aus der tatsächlichen Nachschwingbewegung des Wandlers, die vorbekannt ist, sowie aus dem Einfluss des zurückgeworfenen Sendepulses, der auf den Wandler während der Nachschwingzeit trifft. Es wurde erkannt, dass es die Betrachtung der Phaseninformation, d.h. des Ist-Phasenverlaufs, ermöglicht, den Einfluss des zurückgeworfenen Sendepulses während der Nachschwingzeit von der Nachschwingbewegung selbst zu trennen, insbesondere da der Soll-Phasenverlauf im Wesentlichen nur durch die Bauweise des Wandlers selbst vorgegeben und folglich konstant ist. Erfindungsgemäß wird daher eine Abweichung zwischen dem Ist-Phasenverlauf und dem Soll-Phasenverlauf ermittelt, wobei die Abweichung unmittelbar auf ein Objekt hinweist, das den Sendepuls innerhalb der Nachschwingzeit zum Wandler zurückwirkt. Die Abweichung gibt den Einfluss des zurückgeworfenen Sendepulses und somit Eigenschaften des Sendepulses wieder.

Die Erfindung betrifft daher ein Verfahren zur akustischen Abtastung eines räumlichen Bereichs, wobei zunächst ein akustischer Sendepuls mittels eines akustischen Wandlers in den Bereich ausgesendet wird. Ein Empfangssignal wird mittels des Wandlers erfasst, um den von dem Bereich zurückgeworfenen Sendepuls zu empfangen. Hierbei wird das Empfangssignal vorzugsweise elektrisch erfasst, d.h. an den elektrischen Anschlüssen des Wandlers. Innerhalb einer Nachschwingzeit des Wandlers wird der Ist-Phasenverlauf des Empfangssignals erfasst. Hierbei wird Information erfasst, die entweder den zeitlichen Ist-Phasenverlauf selbst oder die wesentlichen Merkmale des Ist-Phasenverlaufs wiedergibt. Der Ist-Phasenverlauf kann daher auch an anhand von Merkmalen erfasst werden, die den Ist-Phasenverlauf lediglich kennzeichnen, diesen jedoch nicht identisch wiedergeben. Ein Objekt innerhalb des Bereichs wird detektiert, wenn der Ist-Phasenverlauf gegenüber einem vorgegebenen Soll-Phasenverlauf abweicht. Hierzu wird der Ist-Phasenverlauf mit dem Soll-Phasenverlauf verglichen. Ein derartiger Vergleich kann die zeitlichen Phasenverläufe selbst betreffen, oder kann Merkmale betreffen, die die jeweiligen Phasenverläufe kennzeichnen. Als Nachschwingzeit wird diejenige Zeitspanne betrachtet, die sich an das Aussenden des Sendepulses unmittelbar anschließt. Während der Nachschwingzeit wird der Wandler selbst nicht mehr elektrisch angeregt, schwingt jedoch noch aufgrund von gespeicherter kinetischer Energie der Schwingungsmasse und aufgrund von potenzieller Energie von elastischen Eigenschaften des Wandlers weiter.

Der Sendepuls wird durch Anlegen eines elektrischen Anregungssignals an den Wandler erzeugt. Die Nachschwingzeit beginnt somit mit dem Ende des Anregungssignals. Das Ende der Nachschwingzeit ist definiert durch eine im Wesentlichen vollständig gedämpfte Eigenschwingung des Wandlers, d.h. durch einen Zeitpunkt, zu dem der Wandler im Wesentlichen keine eigene Schwingungsbewegung mehr ausführt. Daher endet die Nachschwingzeit, wenn die Eigenschwingung des Wandlers im Wesentlichen vollständig beendet ist. Die Eigenschwingung des Wandlers ist im Wesentlichen vollständig beendet, wenn die Schwingungsamplitude des Wandlers deutlich kleiner ist als eine Amplitude, die sich durch einen akustischen Puls ergibt, der von einem dominanten Objekt in dem abgetasteten Bereich stammt. Die Nachschwingzeit kann ferner vorgegeben sein und unmittelbar von der Bauart des Wandlers abhängen.

Der Soll-Phasenverlauf kennzeichnet die Schwingung des elektrisch und akustisch unbelasteten Wandlers. Somit gibt der Soll-Phasenverlauf eine Schwingung des Wandlers wieder, bei der der Wandler weder elektrisch noch akustisch angeregt wird. Der Soll-Phasenverlauf ist gemäß einer Resonanzfrequenz des Wandlers ausgebildet. Die Resonanzfrequenz ergibt sich wiederum aus der Federkonstanten und der Masse des Wandlers. Insbesondere hängt der Soll-Phasenverlauf nur von der Resonanzfrequenz des Wandlers ab und nicht von den Dämpfungseigenschaften des Wandlers, soweit diese keine Auswirkung auf die Federkonstante oder die Schwingungsmasse des Wandlers haben. Daher entspricht der Soll-Phasenverlauf der Resonanzfrequenz des Wandlers und umgekehrt.

Ferner kann auch eine Abweichung in der Phase zwischen einem Ist-Signalverlauf und einem Soll-Signalverlauf detektiert werden, wobei der Ist-Signalverlauf dem Eingangssignal entspricht und der Soll-Signalverlauf der Signalamplitude des Wandlers während der Nachschwingzeit entspricht, während der Wandler weder akustisch noch elektrisch angeregt wird. Der Soll-Signalverlauf ist vorgegeben und ist lediglich durch die Bauweise des Wandlers definiert. Die Abweichung wird anhand von Merkmalen erfasst, die die jeweilige Phase des Ist-Signalverlaufs und des Soll-Signalverlaufs wiedergeben.

Somit entspricht auch hier die Abweichung den Unterschieden zwischen der Phaseninformation des Ist-Signalverlaufs und des Soll-Signalverlaufs. Insbesondere geben diese Merkmale, anhand denen die Abweichung erfasst wird, den Soll-Phasenverlauf und den Ist-Phasenverlauf wieder. Daher entspricht die Erfassung der Abweichung der Unterschiede zwischen der Phaseninformation des Ist-Signalverlaufs und der Phaseninformation des Soll-Signalverlaufs der erfindungsgemäßen Detektion einer Abweichung des Ist-Phasenverlauf gegenüber dem Soll-Phasenverlauf.

Die Abweichung des Ist-Phasenverlauf gegenüber dem Soll-Phasenverlauf wird insbesondere mittels der folgenden Maßnahmen erfasst.

Gemäß einer ersten Ausführungsform wird der Ist-Phasenverlauf mit dem Soll-Phasenverlauf verglichen. Hierbei können die Phasenverläufe kontinuierlich, quasikontinuierlich oder zeitdiskret angegeben sein. Grundsätzlich können der Ist-Phasenverlauf und der Soll-Phasenverlauf auch wertdiskret angegeben sein. Der Ist-Phasenverlauf und der Soll-Phasenverlauf beziehungsweise die Phaseninformationen, die diese wiedergeben, sind vorzugsweise dargestellt als Relativwinkelangaben, die auf das Intervall [-90°, 90°] oder [0°, 180°] abgebildet wird. Die Relativwinkelangaben beziehen sich somit auf die Phase innerhalb einer Schwingungsperiode und sind für mehrere Schwingungsperioden mehrdeutig.

In einer zweiten Ausführungsform wird die zeitliche Ableitung des Ist-Phasenverlaufs mit der zeitlichen Ableitung des Soll-Phasenverlaufs verglichen. Hierbei werden zunächst sowohl der Ist-Phasenverlauf als auch der Soll-Phasenverlauf zeitlich differenziert, insbesondere mittels eines Differentiators, um die zeitliche Ableitung zu erhalten. Die zeitliche Ableitung der jeweiligen Phasenverläufe entspricht dem Verlauf der Momentanfrequenz des Empfangssignals im Falle des Ist-Phasenverlaufs und der Resonanzfrequenz im Falle des Soll-Phasenverlaufs.

Eine dritte Ausführungsform sieht vor, dass der Ist-Phasenverlauf von Nulldurchgängen oder Extrema wiedergeben wird und der Soll-Phasenverlauf von Nulldurchgängen oder Extrema wiedergegeben wird. Hierbei beziehen sich die Nulldurchgänge oder Extrema, die den Ist-Phasenverlauf wiedergeben, auf Nulldurchgänge oder Extrema des Ist-Signalverlaufs, der dem Empfangssignal entspricht. Die Nulldurchgänge oder Extrema, welche den Soll-Phasenverlauf wiedergeben, beziehen sich auf Nulldurchgänge oder Extrema des Soll-Signalverlaufs, der vorgegeben ist. Es wird die Anzahl von Nulldurchgängen oder Extrema des Ist-Phasenverlaufs, die innerhalb einer vorgegebenen Zeitspanne auftreten, mit der Anzahl von Nulldurchgängen oder Extrema des Soll-Phasenverlaufs verglichen, die innerhalb dieser Zeitspanne auftreten. Die Abweichung zwischen diesen Anzahlen wird detektiert. Somit werden der Ist-Phasenverlauf und der Soll-Phasenverlauf durch die Extrema und die Nulldurchgänge des Ist-Signalverlaufs und des Soll-Signalverlaufs wiedergegeben. Die Extrema und die Nulldurchgänge sind insbesondere gekennzeichnet durch ihre jeweiligen Auftrittszeitpunkte; insbesondere Amplitudenwerte der Extrema werden nicht berücksichtigt. Die Abweichung zwischen den Nulldurchgängen bzw. zwischen den Extrema des Ist-Signalverlaufs und des Soll-Signalverlaufs betrifft die Abweichung zwischen den jeweiligen Auftrittszeitpunkten, die den Ist-Phasenverlauf und den Soll-Phasenverlauf wiedergeben.

Bevorzugt wird die Anzahl von Nulldurchgängen oder Extrema des Ist-Signalverlaufs während einer Zeitspanne mit der Anzahl von Nulldurchgängen oder Extrema des Soll-Signalverlaufs während dieser Zeitspanne verglichen. Die verwendeten Zeitspannen entsprechen somit identischen Beobachtungszeitspannen des Ist- und des Soll-Signalverlaufs. Die Anzahl von Nulldurchgängen kann mittels eines Nulldurchgangsdetektors ermittelt werden oder durch zeitliche Differenzierung des jeweiligen Signalverlaufs und die Erfassung von Extrema des differenzierten Signalverlaufs. Die Anzahl der Extrema des Ist-Signalverlaufs und die Anzahl der Extrema des Soll-Signalverlaufs können durch Spitzenwerterfassung ermittelt werden, wobei die Extrema entweder Minima oder Maxima sind. Insbesondere können die Extrema durch zeitliche Differenzierung des Ist-Signalverlaufs und des Soll-Signalverlaufs sowie durch die Detektion eines Nulldurchgangs des jeweiligen differenzierten Signalverlaufs erfasst werden. Die Anzahl von Nulldurchgängen oder Extrema des Ist-Signalverlaufs bzw. des Soll-Signalverlaufs wird mittels eines Zählers erfasst, der beispielsweise zu Beginn der Zeitspanne auf null gesetzt werden kann und dessen Zählwert zum Ende der Zeitspanne die jeweilige Anzahl angibt. Mit dem Ende der Zeitspanne kann der Zähler zurückgesetzt werden. Die Anzahl der Nulldurchgänge oder der Extrema des jeweiligen Signalverlaufs entspricht der Momentanfrequenz des jeweiligen Signalverlaufs. Gleichzeitig entspricht diese Anzahl der Momentanfrequenz des jeweiligen Phasenverlaufs. Hierbei sind gegebenenfalls Rundungsfehler zu berücksichtigen, die sich durch eine ganzzahlige Zählweise ergeben, die bei der Erfassung der jeweiligen Anzahl verwendet wird. Die Anzahl von Nulldurchgängen oder Extrema entspricht der Anzahl von Schwingungsperioden des Empfangssignals bzw. der Resonanzfrequenz innerhalb der Zeitspanne. Die Anzahl von Nulldurchgängen oder Extrema des Soll-Signalverlaufs ist durch die Resonanzfrequenz vorgegeben und kann daher eine konstante, vorgegebene Zahl sein, insbesondere eine ganzzahlige Zahl.

Gemäß einer vierten Ausführungsform werden die Auftrittszeitpunkte von Nulldurchgängen oder Extrema des Ist-Signalverlaufs mit den Auftrittszeitpunkten von Nulldurchgängen oder Extrema des Soll-Signalverlaufs verglichen. Hierbei geben die Auftrittszeitpunkte der Nulldurchgänge oder der Extrema des Ist-Signalverlaufs den Ist-Phasenverlauf wieder. Ferner geben die Auftrittszeitpunkte der Nulldurchgänge oder der Extrema des Soll-Signalverlaufs den Soll-Phasenverlauf wieder. Die Auftrittszeitpunkte können insbesondere als wertdiskrete Zahl vorgegeben sein, insbesondere wenn zur Zeiterfassung ein Taktsignal verwendet wird. Die Auftrittszeitpunkte werden verglichen, indem erfasst wird, ob die Auftrittszeitpunkte, die den Ist-Phasenverlauf wiedergeben, zeitlich vor oder nach den Auftrittszeitpunkten liegen, die den Soll-Phasenverlauf wiedergeben. Die Auftrittszeitpunkte des Soll-Phasenverlaufs geben die Resonanzfrequenz wieder und sind periodisch verteilt. Der Abstand der Auftrittszeitpunkte innerhalb des Soll-Phasenverlaufs entspricht der Periodenlänge der Resonanzfrequenz des Wandlers, die lediglich von der Bauweise des Wandlers abhängt. Die Auftrittszeitpunkte innerhalb des Soll-Phasenverlaufs können wiedergegeben sein anhand vorgegebener Zeitpunkte, die zeitlich äquidistant zueinander liegen, oder anhand eines festen zeitlichen Abstands zwischen den Auftrittszeitpunkten. Die Auftrittszeitpunkte sind vorzugsweise zeitdiskret dargestellt, so dass als Zeitbasis ein Taktsignal verwendet werden kann.

In der dritten und vierten Ausführungsform werden Nulldurchgänge oder Extrema des Ist-Signalverlaufs und des Soll-Signalverlaufs herangezogen, um den Ist-Phasenverlauf bzw. den Soll-Phasenverlauf wiederzugeben. Die für den Ist- und den Soll-Signalverlauf getroffene Aussagen gelten ebenso für den Ist- und den Soll-Phasenverlauf.

Mit dem erfindungsgemäßen Verfahren wird das Vorliegen eines Objekts detektiert. Hierbei ist durch eine vorgegebene Dauer der Nachschwingzeit auch der Abstand gegeben, der zwischen dem Wandler und dem Objekt liegt. Wenn daher innerhalb der Nachschwingzeit ein Objekt detektiert wird, so kann gleichzeitig angegeben werden, dass dieses Objekt innerhalb eines Maximalabstands vorliegt, der der Laufzeit des Signals über die Dauer der Nachschwingzeit entspricht. Die Laufzeit erstreckt sich über eine Reflexionszeitdauer, die sich vom Aussenden eines Sendepulses bis zum Empfang des zurückgeworfenen Pulses erstreckt.

Bevorzugt wird der Abstand zwischen dem Wandler und dem detektierten Objekt präziser angegeben, wobei auf eine Zeitspanne zurückgegriffen wird. Die Reflexionszeitdauer, die sich von dem Aussenden des Sendepulses bis zum Auftreten der Abweichung erstreckt, dient zur Ermittlung des Abstands zwischen dem Wandler und dem detektierten Objekt. Zur Ermittlung des Abstands zwischen dem Wandler und dem detektierten Objekt wird auf die Schallgeschwindigkeit zurückgegriffen, wobei sich unmittelbar aus der Reflexionszeitdauer und der Schallgeschwindigkeit der Abstand ergibt. Hierbei werden die üblichen Berechnungsverfahren bei der Abstandserfassung verwendet, wie sie aus dem Bereich der Pulsechoverfahren bekannt sind. Grundsätzlich können auch mehrere Abweichungen innerhalb der Nachschwingzeit erfasst werden, wobei jede Abweichung einem Objekt und dem zugehörigen Abstand von dem Wandler entspricht. Die erfindungsgemäße Ermittlung des Abstands zwischen dem Wandler und dem detektierten Objekt ist mit üblichen Pulsechoverfahren vergleichbar, wobei der Auftrittszeitpunkt der Abweichung des erfindungsgemäßen Verfahrens an die Stelle des Auftrittszeitpunkts eines Empfangspulses bei üblichen Pulsechoverfahren tritt. Erfindungsgemäss ist vorgesehen, dass ein sich gegenüber dem Wandler bewegendes Objekt erfasst wird, wenn die Abweichung zwischen dem Ist- und dem Soll-Phasenverlauf eine zeitliche Änderung aufweist. Da die Abweichung eine Abweichung des Ist-Phasenverlaufs vom Soll-Phasenverlauf betrifft, stellt die zeitliche Änderung dieser Abweichung eine Änderung des Signals dar, das von dem Objekt zum Wandler zurückgeworfen wird. Aus der zeitlichen Änderung des vom Objekt zurückgeworfenen Signals kann geschlossen werden, dass sich die Position des Objekts relativ zum Wandler ändert. Dies entspricht einer Bewegung des Objekts relativ zum Wandler. Eine Relativgeschwindigkeit zwischen dem Objekt und dem Wandler wird anhand der zeitlichen Änderung der Abweichung zwischen Ist-Phasenverlauf und Soll-Phasenverlauf erfasst. Die Relativgeschwindigkeit ergibt sich aus der zeitlichen Änderung der Abweichung anhand einer vorgegebenen Abhängigkeit zwischen der Relativgeschwindigkeit und der daraus resultierenden zeitlichen Änderung der Abweichung. Diese Abhängigkeit ist vorgegeben und monoton steigend. Die Abhängigkeit verknüpft die Relativgeschwindigkeit, die zwischen dem Objekt und dem Wandler vorliegt, und die daraus resultierenden zeitlichen Änderung der Abweichung zwischen dem Ist-Phasenverlauf und dem Soll-Phasenverlauf. Die vorgegebene monoton steigende Abhängigkeit gibt somit den Doppler-Effekt wieder, demgemäß die Relativgeschwindigkeit zwischen dem Objekt und dem Wandler zu Änderungen des Phasenverlaufs im Empfangssignal führt. Hierbei gibt das Empfangssignal den Sendepuls wieder, der von dem sich bewegenden Objekt zurückgeworfen wurde. Die Abhängigkeit kann in Form einer Formel oder einer Näherungsformel angegeben werden und sie kann ferner in Form einer Look-up-Tabelle vorgesehen werden, vorzugsweise in Kombination mit einer Interpolationseinrichtung. Insbesondere kann dieser Aspekt der Erfindung mit einer Ausführungsform der Erfindung verknüpft werden, bei der die Abweichung zwischen dem Ist-Phasenverlauf und dem Soll-Phasenverlauf anhand der Momentanfrequenzen oder anhand von dazu äquivalenter Information erfasst wird.

Weiterhin kann das erfindungsgemäße Verfahren verwendet werden, um Bewegungsrichtungen des Objekts relativ zum Wandler zu unterscheiden. Hierbei wird davon ausgegangen, dass sich das Objekt gegenüber dem Wandler bewegt, wodurch der Ist-Phasenverlauf langsamer oder schneller als der Soll-Phasenverlauf ist. Gleichermaßen ist der Ist-Signalverlauf langsamer oder schneller als der Soll-Signalverlauf. Es wird eine Bewegungsrichtung erfasst, mit der sich das Objekt von dem Wandler weg bewegt, wenn die Abweichung wiedergibt, dass der Ist-Phasenverlauf langsamer ist als der Soll-Phasenverlauf. Dies entspricht einer Doppler-Verschiebung hin zu kleineren Frequenzen, wobei sich dies in einem Ist-Phasenverlauf wiederspiegelt, der langsamer ist als der Soll-Phasenverlauf. Auch die dazu komplementäre Bewegung kann erfasst werden. Eine Bewegungsrichtung wird erfasst, mit der sich auf das Objekt auf den Wandler zubewegt, wenn die Abweichung wiedergibt, dass der Ist-Phasenverlauf schneller ist als der Soll-Phasenverlauf. Anstatt der Betrachtung der Geschwindigkeit des Ist-Phasenverlaufs gegenüber dem Soll-Phasenverlauf können auch Frequenzinformationen miteinander verglichen werden, die die Geschwindigkeit des Phasenverlaufs wiedergeben. Wie oben beschrieben, ergibt sich eine derartige Frequenzinformation aus der zeitlichen Ableitung des jeweiligen Phasenverlaufs, aus der Anzahl von Nulldurchgängen innerhalb des jeweiligen Phasenverlaufs oder durch andere Größen, die die Momentanfrequenz innerhalb des jeweiligen Phasenverlaufs wiedergeben. Die hier verwendete Betrachtung einer Änderungsgeschwindigkeit des Ist- und des Soll-Phasenverlaufs entspricht der Betrachtung einer Änderungsgeschwindigkeit des Ist- und des Soll-Signalverlaufs, da beide Änderungsgeschwindigkeiten die gleiche Phaseninformation wiedergeben. Daher gelten Aussagen, die in der vorgenannten Ausführungsform für den Ist- und den Soll-Phasenverlauf getroffen sind, auch für den Ist- und der Soll-Signalverlauf.

Ein Ist-Phasenverlauf, der langsamer ist als der Soll-Phasenverlauf, weist längere zeitliche Abstände zwischen den Nulldurchgängen oder den Extrema auf und gibt somit eine geringere Momentanfrequenz des Empfangssignals gegenüber der Resonanzfrequenz wieder. Ein Ist-Phasenverlauf, der schneller ist als der Soll-Phasenverlauf, weist kürzere zeitliche Abstände zwischen den Nulldurchgängen oder den Extrema auf und gibt somit eine größere Momentanfrequenz des Empfangssignals gegenüber der Resonanzfrequenz wieder. Dies gilt ebenso für Ist- und Soll-Signalverläufe, da diese die gleiche Phaseninformation wie die Ist- und Soll-Phasenverläufe wiedergeben.

Ein weiterer Aspekt der Erfindung betrifft eine spezifische Anwendung des erfindungsgemäßen Verfahrens. Hierbei ist der Wandler in einer Fahrzeugverkleidung eines Kraftfahrzeugs befestigt. Der räumliche Bereich, der akustisch abgetastet wird, liegt in der Umgebung des Fahrzeugs. Der Bereich beginnt im Wesentlichen unmittelbar an dem Wandler. Bei Detektion der Abweichung zwischen dem Ist-Phasenverlauf und dem Soll-Phasenverlauf wird ein Warnsignal abgegeben, welches ein Objekt in nächster Nähe zu dem Wandler wiedergibt. Erfindungsgemäß wird daher die erfindungsgemäße Detektion des Objekts zur Kollisionsvermeidung eines Kraftfahrzeugs verwendet. Da der erfindungsgemäß abgetastete Bereich unmittelbar an dem Wandler und somit am Kraftfahrzeug beginnt, ist es möglich, dass das Kraftfahrzeug sehr nahe an Objekten rangiert werden kann. In dieser Anwendung wird das Verfahren in einem Kollisionswarnsystem, insbesondere innerhalb eines Einparkassistenzsystems verwendet. Erfindungsgemäß gibt die erfindungsgemäße Detektion eines Objekts ein Objekt wieder, das sich in einer Entfernung von nicht mehr als 40 cm, 30 cm, 20 cm oder 10 cm von dem Wandler entfernt befindet. Es werden Objekte erfasst, die derart nahe an dem Wandler positioniert sind, dass der von ihnen zurückgeworfene Sendepuls während der Nachschwingzeit am Wandler eintrifft.

Weiterhin betrifft die Erfindung eine Vorrichtung zur akustischen Abtastung eines Bereichs. Diese umfasst eine Ein-/Ausgabeschnittstelle zum Anschluss eines akustischen Wandlers, insbesondere eines akustischen Wandlers wie er oben beschrieben ist. Die Vorrichtung umfasst einen Sendepulsgenerator und eine Empfangseinrichtung. Der Sendepulsgenerator und die Empfangseinrichtung sind jeweils mit der Ein-/Ausgabeschnittstelle verbunden. Der Sendepulsgenerator gibt über die Ein-/Ausgabeschnittstelle ein Sendesignal an den Wandler ab, der dieses in einen akustischen Sendepuls umwandelt. Die Empfangseinrichtung empfängt über die Ein-/Ausgabeschnittstelle das Empfangssignal des Wandlers. Die Empfangseinrichtung umfasst einen Vergleicher, der eingerichtet ist, einen Ist-Phasenverlauf, der während einer Nachschwingzeit des Wandlers an der Ein-/Ausgabeschnittstelle vorliegt, mit einem vorgegebenen Soll-Phasenverlauf zu vergleichen. Der Ist-Phasenverlauf entspricht dem Phasenverlauf des Empfangssignals, das vom Wandler an die Ein-/Ausgabeschnittstelle abgegeben wird. Der von dem Vergleicher verwendete Ist-Phasenverlauf ist somit der Ist-Phasenverlauf des Empfangssignals. Die Empfangseinrichtung ist eingerichtet, bei einer Abweichung des Ist-Phasenverlaufs gegenüber dem Soll-Phasenverlauf ein Objektsignal auszugeben, das ein Objekt kennzeichnet, welches innerhalb des Bereichs liegt.

Die Empfangseinrichtung umfasst vorzugsweise einen Differentiator, einen Nulldurchgangsdetektor, eine Maximaerfassungsschaltung, eine Minimaerfassungsschaltung oder einen Phasenregelkreis. Diese Komponente ist zwischen der Ein-/Ausgabeschnittstelle und dem Vergleicher angeschlossen. Der Differentiator dient zur Ermittlung der Momentanfrequenz ausgehend von dem Ist-Phasenverlauf. In gleicher Weise dienen der Nulldurchgangsdetektor sowie die Maxima- oder Minimaerfassungsschaltung dazu, die Änderungsgeschwindigkeit innerhalb des Ist-Phasenverlaufs zu erfassen, um somit eine Größe wiederzugeben, die die Momentanfrequenz des Empfangssignals kennzeichnet. Hierzu sind der Nulldurchgangsdetektor beziehungsweise die Maxima- oder Minimaerfassungsschaltung eingerichtet, Auftrittszeitpunkte von Nulldurchgängen, von Maxima oder von Minima zu ermitteln, anhand denen die Änderungsgeschwindigkeit ermittelt wird.

Insbesondere kann ein Phasenregelkreis verwendet werden, mit dem sich die Phase des Empfangssignals verfolgen lässt, wobei der Phasenregelkreis eingerichtet ist, die Momentanfrequenz wiederzugeben. Der Phasenregelkreis ist eingerichtet, eine Regelgröße abzugeben, die die Änderungsgeschwindigkeit der Phase, d.h. die Momentanfrequenz wiedergibt, insbesondere in Form eines Ansteuersignals eines spannungs- oder stromgesteuerten Oszillators, der Teil des Phasenregelkreises ist.

Die Vorrichtung umfasst ferner einen Speicher, in dem der Soll-Phasenverlauf hinterlegt ist. Dieser ist hinterlegt in Form einer Resonanzfrequenz des Wandlers, in Form einer Periodenlänge der Resonanzfrequenz des Wandlers oder auch in Form von Zeitmarkierungen, die die Zeitpunkte der Nulldurchgänge oder der Extrema des Soll-Phasenverlaufs wiedergeben.

Um den Ist-Phasenverlauf zu kennzeichnen, können insbesondere die Nulldurchgänge oder die Extrema verwendet werden. Anstatt dieser Merkmale des Phasenverlaufs können auch andere Merkmale des Phasenverlaufs verwendet werden, beispielsweise Wendepunkte des Signalverlaufs oder andere Kurvenmerkmale. Die erfindungsgemäße Vorrichtung umfasst in diesem Fall eine Erfassungsschaltung eingerichtet zur Erfassung der Auftrittszeitpunkte derartiger Kurvenmerkmale.

Das Verfahren dient zur Detektion von Objekten, deren zurückgeworfener Sendepuls innerhalb einer Nachschwingzeit eintrifft. Daher kann vorgesehen sein, dass das Verfahren nicht ausgeführt wird, wenn die Nachschwingzeit beendet ist, beispielsweise wenn das Empfangssignal eine Signalstärke aufweist, die geringer als ein vorgegebener Schwellwert ist. Insbesondere wird das Verfahren erst dann ausgeführt, wenn die Anregung des Wandlers beendet ist. Es kann vorgesehen sein, dass das Verfahren erst mit dem Ende einer zusätzlichen Sicherheitszeitspanne ausgeführt wird, die sich unmittelbar an das Ende der Anregung des Wandlers anschließt. Hierbei ist die Sicherheitsspanne deutlich kürzer als die Nachschwingzeit und entspricht beispielsweise der Länge von einigen wenigen Perioden der Resonanzfrequenz, beispielsweise nicht mehr als zwei oder nicht mehr als fünf Schwingungsperioden der Resonanzfrequenz.

Anstatt Nulldurchgänge in beiden Richtungen zu betrachten, können auch nur die Nulldurchgänge in eine bestimmte Richtung betrachtet werden, beispielsweise von einer negativen Halbwelle zu einer positiven Halbwelle, um beispielsweise die Signalverarbeitung etwas zu vereinfachen. Gleichermaßen können beide Extrema betrachtet werden oder, alternativ, nur die Minima oder nur die Maxima.

### Kurze Beschreibung der Zeichnungen

Die Figur 1 zeigt ein Schwingungssignal zur näheren Erläuterung der Erfindung und
die Figur 2 zeigt eine Ausführungsform der erfindungsgemäßen Vorrichtung zur akustischen Abtastung eines Bereichs

### Ausführungsformen der Erfindung

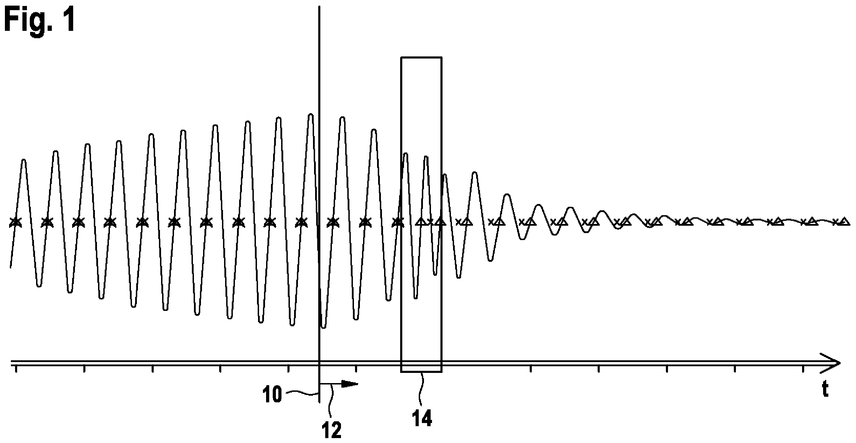

Die Figur 1 zeigt einen Ist-Signalverlauf eines Wandlers, der erfindungsgemäß eingesetzt wird. Bis zu einem Zeitpunkt 10 wird der Wandler angeregt, so dass sich bis zum

Zeitpunkt 10 eine zunehmende Schwingungsamplitude ergibt. Ab dem Zeitpunkt 10 beginnt die Nachschwingzeit 12, wobei der Zeitpunkt 10 das Ende der Anregung des Wandlers darstellt. Es ist ersichtlich, dass in der Nachschwingzeit 12 die Signalstärke gemäß dem Nachschwingverhalten des Wandlers kontinuierlich abnimmt. In der Zeitspanne 14 trifft ein zurückgeworfener Sendepuls auf den Wandler, so dass der zurückgeworfene Sendepuls das Nachschwingverhalten beeinflusst. Nach der Zeitspanne 14 innerhalb der Nachschwingzeit 12 ist der zurückgeworfene Sendepuls beendet und das Nachschwingverhalten wird nicht weiter beeinflusst.

Ein Ist-Phasenverlauf ergibt sich aus Nulldurchgängen des Ist-Signalverlaufs in positiver Richtung, wobei die entsprechenden Auftrittszeitpunkte als Dreiecke dargestellt sind. Gleichermaßen ist ein Soll-Signalverlauf eingezeichnet, der mit Kreuzen gekennzeichnet ist, die die Nulldurchgänge des Soll-Signalverlaufs in positiver Richtung wiedergeben. Ein Soll-Phasenverlauf ergibt sich aus den Nulldurchgängen des Soll-Signalverlaufs. Der Soll-Phasenverlauf ist gemäß der konstanten Resonanzfrequenz des Wandlers dargestellt. Daher sind die Kreuze, die den Soll-Phasenverlaufs wiedergeben, äquidistant zueinander. Bis zum Zeitpunkt 10 entsprechen die Auftrittszeitpunkte der Nulldurchgänge des Ist-Phasenverlaufs den Auftrittszeitpunkte der Nulldurchgänge des Soll-Phasenverlaufs, insbesondere da bis zum Zeitpunkt 10 der Wandler mit der Resonanzfrequenz angeregt wird. In der Nachschwingzeit bis zur Zeitspanne 14 schwingt der Wandler mit der Resonanzfrequenz des Wandlers nach, so dass der Ist-Phasenverlauf dem Soll-Phasenverlauf entspricht. Dies ist in der Figur dadurch dargestellt, dass zwischen dem Zeitpunkt 10 und dem Beginn der Zeitspanne 14 die Auftrittszeitpunkte der Nulldurchgänge des Ist-Phasenverlaufs, die als Dreiecke dargestellt sind, den Auftrittszeitpunkten der Nulldurchgängen des Soll-Phasenverlaufs entsprechen, die als Kreuze dargestellt sind.

Innerhalb der Zeitspanne 14, in der der zurückgeworfene Sendepuls und das Nachschwingverhalten überlagert sind, ergibt sich eine gestauchte Schwingungsbewegung. Dies ist unmittelbar ersichtlich durch die Dreiecke innerhalb der Zeitspanne 14, die deutlich enger aufeinander liegen als die Dreiecke außerhalb der Zeitspanne 14. Da somit die Nulldurchgänge, die den Ist-Phasenverlauf darstellen, innerhalb der Zeitspanne 14 enger aufeinanderfolgen, ergibt sich eine Abweichung gegenüber denjenigen Nulldurchgängen, die den Soll-Phasenverlauf in Form von Kreuzen darstellen. Es ist ersichtlich, dass innerhalb der Zeitspanne 14 die Nulldurchgänge, die den Ist-Phasenverlauf darstellen, zunehmend von den Nulldurchgängen abweichen, die den Soll-Phasenverlauf darstellen. Diese Abweichung wird als Abweichung des Ist-Phasenverlaufs gegenüber dem vorgegebenen Soll-Phasenverlauf erfasst und für die Zeitspanne 14 wird ein Objekt detektiert.

Nach der Zeitspanne 14 wird das Nachschwingen ohne Beeinflussung eines zurückgeworfenen Sendepulses fortgeführt, da dieser beendet ist, so dass die Abweichung des Ist-Phasenverlaufs vom vorgegebenen Soll-Phasenverlauf konstant bleibt. Im Vergleich hierzu ändert sich die Abweichung des Ist-Phasenverlaufs vom Soll-Phasenverlauf innerhalb der Zeitspanne 14. Der Beginn der Zeitspanne 14 entspricht dem Beginn dieser Abweichung, so dass für diesen Zeitpunkt ein zurückgeworfener Sendepuls angenommen wird, der vom Wandler empfangen wird. Aus diesem lässt sich unmittelbar auf ein Objekt schließen. Die Änderung der Abweichung innerhalb der Zeitspanne 14 lässt ferner darauf schließen, dass sich das Objekt auf den Wandler zubewegt, da dort der Ist-Phasenverlauf schneller ist als der Soll-Phasenverlauf, wie es sich aus der Abfolge der Dreiecke gegenüber der Abfolge der Kreuze ergibt. Nach der Zeitspanne 14 ist die Abweichung zwischen Ist-Phasenverlauf und Soll-Phasenverlauf konstant, so dass aus dieser Abweichung zwar auf das Objekt geschlossen werden kann, jedoch nicht auf eine Bewegung des Objekts. Die Abweichung zwischen den Phasenverläufen nach der Zeitspanne 14 gibt einen Hinweis darauf, dass innerhalb der Zeitspanne 14, innerhalb der die Abweichung zuerst auftrat, ein zurückgeworfener Sendepuls empfangen wurde. Die dadurch resultierende Abweichung wird ab der Zeitspanne 14 lediglich fortgeführt. Die Abweichung innerhalb der Zeitspanne, die mit dem Ende der Zeitspanne 14 beginnt, weist daher lediglich auf ein Objekt hin, wobei dessen Entfernung sich aus dem Zeitpunkt ergibt, an dem die Abweichung zuerst auftrat. Daher gibt der zeitliche Abstand zwischen dem Zeitpunkt 10 und dem Beginn der der Zeitspanne 14 den Abstand zwischen Objekt und Wandler wieder. Mit anderen Worten ergibt sich der Abstand des Objekts vom Wandler durch die Zeitdauer zwischen dem Ende der Anregung des Wandlers und dem Beginn der Abweichung zwischen Ist-Phasenverlauf und Soll-Phasenverlauf in Zeitspanne 14.

In Figur 1 entspricht die Resonanzfrequenz des Wandlers 44 kHz, so dass die Zeitdauer zwischen zwei aufeinander folgenden positiven Nulldurchgängen, die von dem Soll-Phasenverlauf wiedergegeben werden, etwa 22,7 µs beträgt.

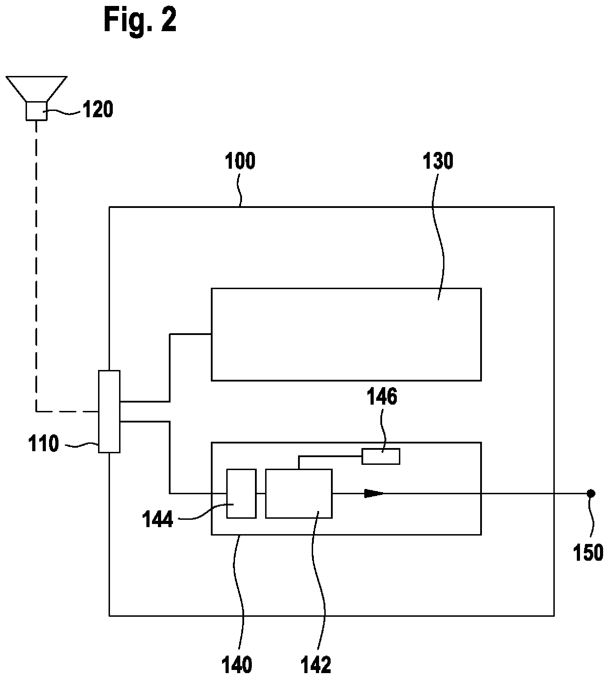

Die Figur 2 zeigt eine Ausführungsform der erfindungsgemäßen Vorrichtung 100 mit einer Ein-/Ausgabeschnittstelle 110, an die ein akustischer Wandler 120 angeschlossen werden kann. Da der akustische Wandler 120 nicht notwendigerweise Teil der Vorrichtung ist, ist die Verbindung zur Ein-/Ausgabeschnittstelle 110 lediglich gestrichelt dargestellt. Die Vorrichtung umfasst einen Sendepulsgenerator 130 sowie eine Empfangseinrichtung 140. Die Empfangseinrichtung 140 umfasst einen Vergleicher 142, der über einen Nulldurchgangsdetektor 144 der Empfangseinrichtung 140 mit der Ein-/Ausgabeschnittstelle 110 verbunden ist. Der Nulldurchgangsdetektor 144 ist eingerichtet, das Empfangssignal des Wandlers 120 über die Ein-/Ausgabeschnittstelle 110 zu empfangen und die Nulldurchgänge des Empfangssignals zu detektieren. Die vom Nulldurchgangsdetektor 144 erfassten Nulldurchgänge geben den Ist-Phasenverlauf des Empfangssignals wieder. Der Vergleicher 142 ist eingerichtet, den Ist-Phasenverlauf, der durch die Auftrittszeitpunkte der Nulldurchgänge des Empfangssignals kennzeichnet ist, mit einem entsprechenden Soll-Phasenverlauf zu vergleichen. Der Soll-Phasenverlauf ist in einem Speicher 146 der Empfangsvorrichtung hinterlegt. Hierbei ist der Soll-Phasenverlauf in Form von Auftrittszeitpunkten von Nulldurchgängen, die in einem Nachschwingsignal eines akustisch und elektrisch unbelasteten Wandlers auftreten, in dem Speicher 146 hinterlegt. Da die Nulldurchgänge lediglich durch ihre Austrittszeitpunkte gekennzeichnet sind und der Soll-Phasenverlauf von periodischen Nulldurchgängen ausgehen kann, kann in dem Speicher 146 lediglich die Zeitspanne zwischen zwei aufeinander folgenden Nulldurchgängen hinterlegt sein, die den Soll-Phasenverlauf kennzeichnen. Das Vergleichssignal wird über einen Ausgang 150 der Vorrichtung abgegeben, der mit dem Ausgang des Vergleichers 142 verbunden ist. Der Vergleicher 142 ist eingerichtet, ein erstes Signal auszugeben, wenn der Ist-Phasenverlauf dem Soll-Phasenverlauf entspricht, und ein zweites, dazu verschiedenes Signal auszugeben, wenn eine Abweichung zwischen dem Ist-Phasenverlauf und dem Soll-Phasenverlauf besteht. Ferner kann der Vergleicher 142 eingerichtet sein, eine zeitliche Änderung der Abweichung in Form eines entsprechenden Signalverlaufs am Ausgang 150 auszugeben.

## Patentansprüche

1. Verfahren zur akustischen Abtastung eines Bereichs, umfassend: Aussenden eines akustischen Sendepulses in den Bereich mittels eines akustischen Wandlers (120) und Erfassen eines Empfangssignals mittels des Wandlers (120), um den von dem Bereich zurückgeworfenen Sendepuls zu empfangen, wobei innerhalb einer Nachschwingzeit (12) des Wandlers (120), die sich an das Aussenden des Sendepulses unmittelbar anschließt, ein Ist-Phasenverlauf des Empfangssignals erfasst wird, wobei bei einer Abweichung des Ist-Phasenverlaufs gegenüber einem vorgegebenen Soll-Phasenverlauf ein Objekt innerhalb des Bereichs detektiert wird, **dadurch gekennzeichnet, dass** ein sich gegenüber dem Wandler bewegendes Objekt erfasst wird, wenn die Abweichung des Ist-Phasenverlaufs gegenüber dem Soll-Phasenverlauf eine zeitliche Änderung aufweist, und eine Relativgeschwindigkeit zwischen dem Objekt und dem Wandler erfasst wird, die sich aus der zeitlichen Änderung der Abweichung durch eine vorgegebene Abhängigkeit ergibt, wobei diese Abhängigkeit eine monoton steigende Abhängigkeit zwischen der Relativgeschwindigkeit und der daraus resultierenden zeitlichen Änderung der Abweichung ist.

2. Verfahren nach Anspruch 1, wobei der Sendepuls durch Anlegen eines elektrischen Anregungssignals an den Wandler erzeugt wird und die Nachschwingzeit (12) mit dem Ende (10) des Anregungssignals beginnt, wobei die Nachschwingzeit (12) endet, wenn eine Eigenschwingung des Wandlers im Wesentlichen vollständig endet.

3. Verfahren nach Anspruch 1 oder 2, wobei der Soll-Phasenverlauf eine Schwingung des Wandlers (120) wiedergibt, bei der dieser weder elektrisch noch akustisch angeregt wird, und der Soll-Phasenverlauf gemäß einer Resonanzfrequenz des Wandlers (120) ausgebildet ist.

4. Verfahren nach einem der vorangehenden Ansprüche, wobei die Abweichung des Ist-Phasenverlaufs gegenüber dem Soll-Phasenverlauf erfasst wird,
indem der Ist-Phasenverlaufs mit dem Soll-Phasenverlauf verglichen wird,
indem die zeitliche Ableitung des Ist-Phasenverlaufs mit der zeitliche Ableitung des Soll-Phasenverlaufs verglichen wird,
indem eine Anzahl von in einer vorgegebenen Zeitspanne auftretenden Nulldurchgängen oder Extrema, welche den Ist-Phasenverlauf wiedergeben, mit einer Anzahl von Nulldurchgängen oder Extrema innerhalb dieser Zeitspanne verglichen wird, die den Soll-Phasenverlauf wiedergeben;
indem die Zeitpunkte von Nulldurchgängen oder Extrema, die den Ist-Phasenverlaufs wiedergeben, mit Zeitpunkten von Nulldurchgängen oder Extrema verglichen werden, die den Soll-Phasenverlauf wiedergeben.

5. Verfahren nach einem der vorangehenden Ansprüche, wobei aus einer Reflexionszeitdauer, die sich von dem Aussenden des Sendepuls bis zum Auftreten der Abweichung erstreckt, ein Abstand zwischen dem Wandler und dem detektierten Objekt auf Basis der Schallgeschwindigkeit ermittelt wird.

6. Verfahren nach einem der vorangehenden Ansprüche, wobei sich das Objekt gegenüber dem Wandler bewegt und ferner eine Bewegungsrichtung erfasst wird, mit der sich das Objekt von dem Wandler weg bewegt, wenn die Abweichung wiedergibt, dass der Ist-Phasenverlauf langsamer ist als der Soll-Phasenverlauf, und eine Bewegungsrichtung erfasst wird, mit der sich das Objekt auf den Wandler zu bewegt, wenn die Abweichung wiedergibt, dass der Ist-Phasenverlauf schneller ist als der Soll-Phasenverlauf.

7. Verfahren nach einem der vorangehenden Ansprüche, wobei der Wandler in einer Fahrzeugverkleidung eines Kraftfahrzeugs befestigt ist und der Bereich, der akustisch abgetastet wird, in der Umgebung des Fahrzeugs liegt, wobei bei Detektion der Abweichung zwischen dem Ist-Phasenverlauf und dem Soll-Phasenverlauf ein Warnsignal abgegeben wird, das ein Objekt in nächster Nähe zu dem Wandler wiedergibt, insbesondere ein Objekt mit einem Abstand von nicht mehr als 40 cm, 30 cm, 20 cm oder 10 cm von dem Wandler.

8. Vorrichtung (100) zur akustischen Abtastung eines Bereichs, umfassend: eine Ein-/Ausgabeschnittstelle (110) zum Anschluss eines akustischen Wandlers (120), wobei die Vorrichtung (100) einen Sendepulsgenerator (130) und eine Empfangseinrichtung (140) umfasst, die jeweils mit der Ein-/Ausgabeschnittstelle (110) verbunden sind, wobei die Empfangseinrichtung (140) einen Vergleicher (142) umfasst, der eingerichtet ist, einen Ist-Phasenverlauf, der während einer Nachschwingzeit des Wandlers (120) an der Ein-/Ausgabeschnittstelle (110) vorliegt, mit einem vorgegebenen Soll-Phasenverlauf zu vergleichen, wobei die Empfangseinrichtung (140) eingerichtet ist, bei einer Abweichung des Ist-Phasenverlaufs gegenüber dem Soll-Phasenverlauf ein Objektsignal auszugeben, das ein Objekt kennzeichnet, das innerhalb des Bereichs liegt, **dadurch gekennzeichnet, dass** ein sich gegenüber dem Wandler bewegendes Objekt erfasst wird, wenn die Abweichung des Ist-Phasenverlaufs gegenüber dem Soll-Phasenverlauf eine zeitliche Änderung aufweist, und eine Relativgeschwindigkeit zwischen dem Objekt und dem Wandler erfasst wird, die sich aus der zeitlichen Änderung der Abweichung durch eine vorgegebene Abhängigkeit ergibt, wobei diese Abhängigkeit eine monoton steigende Abhängigkeit zwischen der Relativgeschwindigkeit und der daraus resultierenden zeitlichen Änderung der Abweichung ist.

9. Vorrichtung nach Anspruch 8, wobei die Empfangseinrichtung (140) ferner einen Differentiator, einen Nulldurchgangsdetektor (144), eine Maximaerfassungsschaltung, eine Minimaerfassungsschaltung oder einen Phasenregelkreis umfasst, der bzw. die zwischen der Ein-/Ausgabeschnittstelle (110) und dem Vergleicher (142) angeschlossen ist, und der Soll-Phasenverlauf in einem Speicher (146) der Vorrichtung (100) hinterlegt ist in Form einer Resonanzfrequenz des Wandlers oder in Form einer Periodenlänge der Resonanzfrequenz des Wandlers (120) oder in Form eines Auftrittsmusters von Nulldurchgängen, von Maxima oder von Minima, die das einer Schwingung des Wandlers (120) entspricht, bei der dieser weder elektrisch noch akustisch angeregt wird.

## Claims

1. Method for acoustically scanning an area, comprising: transmission of an acoustic transmission pulse into the area by means of an acoustic transducer (120) and capture of a received signal by means of the transducer (120) in order to receive the transmission pulse returned from the area, wherein an actual phase profile of the received signal is captured within a post-pulse oscillation time (12) of the transducer (120) that directly follows the transmission of the transmission pulse, wherein an object is detected within the area in the event of a discrepancy between the actual phase profile and a prescribed setpoint phase profile,
**characterized in that**
an object moving relative to the transducer is sensed if the discrepancy between the actual phase profile and the setpoint phase profile exhibits a change over time, and a relative speed between the object and the transducer is sensed that results from the change in the discrepancy over time owing to a prescribed dependency, this dependency being a monotonously rising dependency between the relative speed and the resultant change in the discrepancy over time.

2. Method according to Claim 1, wherein the transmission pulse is generated by applying an electrical excitation signal to the transducer, and the post-pulse oscillation time (12) begins at the end (10) of the excitation signal, the post-pulse oscillation time (12) ending when a natural oscillation of the transducer ends substantially completely.

3. Method according to Claim 1 or 2, wherein the setpoint phase profile represents an oscillation of the transducer (120) that prompts the latter to be neither electrically nor acoustically excited, and the setpoint phase profile is formed according to a resonant frequency of the transducer (120).

4. Method according to one of the preceding claims, wherein the discrepancy between the actual phase profile and the setpoint phase profile is sensed
by virtue of the actual phase profile being compared with the setpoint phase profile,
by virtue of the time derivative of the actual phase profile being compared with the time derivative of the setpoint phase profile,
by virtue of a number of zero crossings or extremes, which occur in a prescribed period and represent the actual phase profile, being compared with a number of zero crossings or extremes within this period that represent the setpoint phase profile;
by virtue of the times of zero crossings or extremes that represent the actual phase profile being compared with times of zero crossings or extremes that represent the setpoint phase profile.

5. Method according to one of the preceding claims, wherein a reflection period that extends from the transmission of the transmission pulse to the occurrence of the discrepancy is used to ascertain a distance between the transducer and the detected object on the basis of the speed of sound.

6. Method according to one of the preceding claims, wherein the object moves relative to the transducer and, further, a direction of movement is sensed for the object moving away from the transducer when the discrepancy conveys that the actual phase profile is slower than the setpoint phase profile, and a direction of movement is sensed for the object moving towards the transducer when the discrepancy conveys that the actual phase profile is faster than the setpoint phase profile.

7. Method according to one of the preceding claims, wherein the transducer is mounted in a vehicle panelling of a motor vehicle and the area that is acoustically scanned is in the surroundings of the vehicle, wherein detection of the discrepancy between the actual phase profile and the setpoint phase profile prompts a warning signal to be delivered that represents an object extremely close to the transducer, particularly an object at a distance of no more than 40 cm, 30 cm, 20 cm or 10 cm from the transducer.

8. Apparatus (100) for acoustically scanning an area, comprising: an input/output interface (110) for connecting an acoustic transducer (120), wherein the apparatus (100) comprises a transmission pulse generator (130) and a reception device (140) that are each connected to the input/output interface (110), wherein the reception device (140) comprises a comparator (142) that is set up to compare an actual phase profile that is present on the input-output interface (110) during a post-pulse oscillation time of the transducer (120) with a prescribed setpoint phase profile, wherein the reception device (140) is set up to output, in the event of a discrepancy between the actual phase profile and the setpoint phase profile, an object signal that identifies an object that is within the area, **characterized in that** an object moving relative to the transducer is sensed when the discrepancy between the actual phase profile and the setpoint phase profile exhibits a change over time, and a relative speed between the object and the transducer is sensed that results from the change in the discrepancy over time owing to a prescribed dependency, this dependency being a monotonously rising dependency between the relative speed and the resultant change in the discrepancy over time.

9. Apparatus according to Claim 8, wherein the reception device (140) further comprises a differentiator, a zero crossing detector (144), a maxima sensing circuit, a minima sensing circuit or a phase locked loop that is connected between the input/output interface (110) and the comparator (142), and the setpoint phase profile is stored in a memory (146) of the apparatus (100) in the form of a resonant frequency of the transducer or in the form of a period length of the resonant frequency of the transducer (120) or in the form of an appearance pattern for zero crossings for maxima or for minima that corresponds to an oscillation of the transducer (120) that prompts the latter to be neither electrically nor acoustically excited.

## Revendications

1. Procédé d'analyse acoustique d'une zone, consistant à : émettre une impulsion d'émission acoustique dans la zone au moyen d'un transducteur acoustique (120) et détecter un signal de réception au moyen du transducteur (120) afin de recevoir l'impulsion d'émission renvoyée par la zone, dans lequel, pendant une période de réverbération (12) du transducteur (120) qui suit directement l'émission de l'impulsion d'émission, on détecte une variation de phase réelle du signal de réception, dans lequel, lors d'un écart de la variation de phase réelle par rapport à une variation de phase nominale prédéterminée, un objet est détecté à l'intérieur de la zone,
**caractérisé en ce qu'**on détecte un objet se déplaçant par rapport au transducteur lorsque l'écart de la variation de phase réelle par rapport à la variation de phase nominale présente une variation temporelle, et on détecte une vitesse relative entre l'objet et le transducteur, qui est obtenue à partir de la variation temporelle de l'écart selon une fonction prédéterminée, dans lequel ladite fonction est une fonction croissant de manière monotone entre la vitesse relative et la variation temporelle qui en résulte de l'écart.

2. Procédé selon la revendication 1, dans lequel l'impulsion d'émission est générée par application d'un signal d'excitation électrique au transducteur et la période de réverbération (12) commence à la fin (10) du signal d'excitation, dans lequel la période de réverbération (12) se termine lorsqu'une oscillation propre du transducteur s'est presque entièrement terminée.

3. Procédé selon la revendication 1 ou 2, dans lequel la variation de phase nominale représente une oscillation du transducteur (120) pour laquelle ce dernier n'est excité ni électriquement ni acoustiquement, et dans lequel la variation de phase nominale est établie conformément à une fréquence de résonance du transducteur (120).

4. Procédé selon l'une quelconque des revendications précédentes, dans lequel on détecte l'écart de la variation de phase réelle par rapport à la variation de phase nominale,
en comparant la variation de phase réelle à la variation de phase nominale,
en comparant la dérivée par rapport au temps de la variation de phase réelle à la dérivée par rapport au temps de la variation de phase nominale,
en comparant un nombre de passages à zéro où d'extrêmes représentant la variation de phase réelle, se produisant au cours d'un intervalle de temps prédéterminé, à un nombre de passages à zéro représentant la variation de phase nominale, au cours dudit intervalle de temps ;
en comparant les instants des passages à zéro ou des extrêmes, représentant la variation de phase réelle, aux instants des passages à zéro ou des extrêmes représentant la variation de phase nominale.

5. Procédé selon l'une quelconque des revendications précédentes, dans lequel on détermine une distance entre le transducteur et l'objet détecté sur la base de la vitesse du son à partir d'une durée de réflexion qui s'étend de l'émission de l'impulsion d'émission à l'apparition de l'écart.

6. Procédé selon l'une quelconque des revendications précédentes, dans lequel l'objet se déplace par rapport au transducteur et dans lequel on détecte en outre une direction de déplacement dans laquelle l'objet s'éloigne du détecteur lorsque l'écart représente le fait que la variation de phase réelle est plus lente que la variation de phase nominale, et on détecte une direction de déplacement dans laquelle l'objet se déplace vers le transducteur lorsque l'écart représente le fait que la variation de phase réelle est plus rapide que la variation de phase nominale.

7. Procédé selon l'une quelconque des revendications précédentes, dans lequel le transducteur est fixé dans une garniture de véhicule destinée à un véhicule automobile et dans lequel la zone qui est analysée acoustiquement se trouve dans l'environnement du véhicule, dans lequel, lors de la détection de l'écart entre la variation de phase réelle et la variation de phase nominale, un signal d'alarme est produit, celui-ci représentant un objet situé à proximité immédiate du transducteur, en particulier un objet dont la distance par rapport au transducteur n'est pas supérieure à 40 cm, 30 cm, 20 cm ou 10 cm.

8. Dispositif (100) d'analyse acoustique d'une zone, comprenant : une interface d'entrée/sortie (110) permettant la connexion d'un transducteur acoustique (120), dans lequel le dispositif (100) comprend un générateur d'impulsion d'émission (130) et un dispositif de réception (140) qui sont respectivement connectés à l'interface d'entrée/sortie (110), dans lequel le dispositif de réception (140) comprend un convertisseur (142) conçu pour comparer une variation de phase réelle se produisant pendant une période de réverbération du transducteur (120) au niveau de l'interface d'entrée/sortie (110), à une variation de phase nominale prédéterminée, dans lequel le dispositif de réception (140) est conçu pour fournir en sortie, lors d'un écart de la variation de phase réelle par rapport à la variation de phase nominale, un signal d'objet qui caractérise un objet se trouvant à l'intérieur de la zone,
**caractérisé en ce qu'**on détecte un objet se déplaçant par rapport au transducteur lorsque l'écart de la variation de phase réelle par rapport à la variation de phase nominale présente une variation temporelle, et **en ce qu'**on détecte une vitesse relative entre l'objet et le transducteur, qui résulte de la variation temporelle de l'écart selon une fonction prédéterminée, dans lequel ladite fonction est une fonction croissant de manière monotone entre la vitesse relative et la variation temporelle qui en résulte de l'écart.

9. Dispositif selon la revendication 8, dans lequel le dispositif de réception (140) comprend en outre un différentiateur, un détecteur de passages à zéro (144), un circuit de détection de maxima, un circuit de détection de minima ou un circuit de régulation de phase qui est connecté entre l'interface d'entrée/sortie (110) et le comparateur (142), et la variation de phase nominale est stockée dans une mémoire (146) du dispositif (100) sous la forme d'une fréquence de résonance du transducteur ou sous la forme d'une longueur de période de la fréquence de résonance du transducteur (120) ou sous la forme d'un motif d'apparition des passages à zéro, des maxima ou des minima, correspondant à une oscillation du transducteur (120), pour lesquels ce dernier n'est excité ni électriquement ni acoustiquement.
